# EUROPEAN PATENT APPLICATION

(11) **EP 3 321 023 A1**
(43) Date of publication of application: **16.05.2018**
(21) Application number: 16198638.5
(22) Date of filing: 14.11.2016
(51) Int. Cl.: B23K 26/00, B23K 26/0622, C04B 41/87, C04B 41/91, C04B 41/00, B23K 103/16, B23K 103/00

(54) **SURFACE ROUGHENING OF CMC AND COATED CMC**

(71) Applicant: Siemens Aktiengesellschaft, 80333 München (DE)
(72) Inventor: Flores Renteria, Arturo, 12161 Berlin (DE); Mitchell, David J., Oviedo, FL 32765 (US); Van der Laag, Niels, 81369 München (DE)

(57) **Abstract**

By surface roughening of CMC component via a pico-laser treatment a good adhering of a plasma sprayed coating is achieved.

## Description

The invention relates to a surface roughening of a CMC part which will be coated with a ceramic layer.

Oxide based Ceramic Matrix Composites (CMC's) provide a higher temperature capability (1423K) than superalloys 1273K C) and superior oxidation resistance. The limited fracture resistance and damage tolerance of ceramic materials is substantially improved by the fiber reinforcement. However, the load bearing capacity (mechanical strength) of these Oxide-Oxide (Ox-Ox) CMCs is also limited by grain growth and reaction processes with the matrix and/or the environment at 1423K and higher. With firing temperatures as high as 1873 - 1973K, Ox-Ox CMCs need Environmental Barrier Coatings (EBCs) that maintain CMCs below 1423K. Thus, CMCs can be used to its full potential, only if the coating can be integrated in to the system design.

For oxide-oxide CMCs, application of the thermal barrier was by a FGI (Friable Graded Insulation) system. FGI was coprocessed along with CMC, however, currently the hollow spheres needed for this coating system are not commercially available. In addition, the capability of the coating to recession at high surface temperatures (1873K-1973K) is not expected to match behavior of zirconia based materials.

It is therefore aim of the invention to overcome the problems described above.

The current proposal takes into account the experience of using proper roughening of the substrate surface for TBC adhesion.

The problems are solved by an method according to claim 1 and a product according to claim 3.

In the further dependent claims further advantages are listed which can be arbitrarily combined with each other to yield further advantages.

The description and the figure are only examples of the invention.

Application of plasma sprayed coating on CMC surface is not easy. Depending upon the local macro roughness of the ceramic fibers and matrix infiltration characteristics, the adhesion of plasma sprayed coatings are poor. Plasma sprayed coating don't adhere well to CMC surfaces especially on the surface of in-plane fibers direction.

The proposed invention embodiments provide significant improvements in the ability for plasma sprayed coatings to adhere to the CMC substrate.

Better adhesion is achieved by increasing mechanical interlocking via surface roughening of the CMC by using pico-laser machining. This technology allows the grinding of the CMC surface in a better controlled way compared to standard grit-blasting processing or as received conditions. Moreover, the pico-laser avoids the glassing of the ceramic material surface by its capability of almost fully evaporate the CMC during machining.

The inventive step is the use of pico-laser to prepare the CMC surface in the out of plane configuration prior to the APS coating process enhancing the engineering capability of the surface preparation compared to standard processes like grit blasting.

Furthermore, no extra phases are introduced into the top region of the CMC due to the capability of pico-laser machining to overcome glassing. This allows an improved chemical bonding with the EBC without a potentially weak glassy interlayer. Additionally it allows an enhanced shape of the roughness (macro- and micro roughness of hills and valleys).

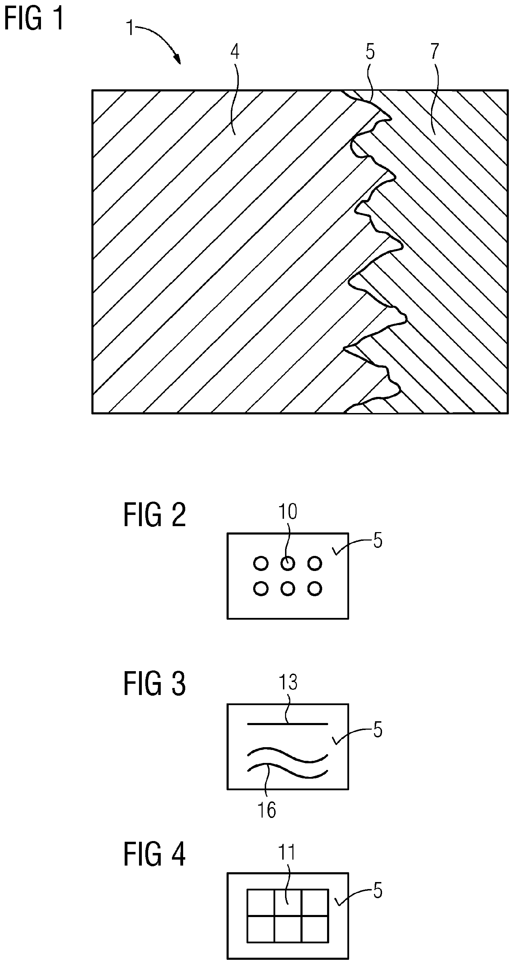

The figure 1 shows a CMC component 1 which comprises a CMC substrate 4 with a surface 5.

The substrate 4 is made of a CMC, preferably of an Ox-Ox-CMC, but not limited.

As described above the surface 5 of the CMC-substrate 4 is roughened or structured by a pico-laser, which leads to no melting of the material of the CMC.
Pulses in the pico-second region are used, especially max 900ps.

The surface 5 of the CMC-substrate 4 can comprises holes 10 (Fig. 2), especially round holes, elongated engravings 13, 16 (Fig. 3), which can be straight 13 or waved 16 or grids 11 (Fig. 4). These forms 10, 13, 16, 11 can appear alone or in combination with each other in the surface 5.

An alternative is to randomly remove locally material from the surface to roughen the surface 5 deeper and additionally (Fig. 5).

Especially a depth of 50µm to 100µm is at least given for the holes 10, engravings 13, 16 or grids 11.

After that a ceramic layer 7 is applied on which is preferably performed by APS.

The material of the ceramic layer 7 is preferably zirconia (ZrO₂), stabilized zirconia 8YSZ and/or an alumina sublayer, or alumina or 48YSZ (fully stabilized zirkonia).

## Claims

1. Method of roughening a surface (5) of a CMC substrate (4) of a CMC component (1),
wherein a pico-laser with pulses in the pico-second area is used to roughen or engrave the surface (5) of the CMC substrate (4).

2. Method according to claim 1,
wherein holes,
especially round holes (10), and/or
engravings (13, 16) and/or
grids (11) or
combinations are produced into the surface (5) of the CMC substrate (4).

3. Product (1),
especially produced by a method according to claim 1 or 2, which has a ceramic layer (7) on a roughened surface (5) of a substrate (4),
wherein the ceramic layer (7) has a APS applied-like microstructure.

4. Product according to claim 3,
wherein the material of the ceramic layer (7) comprises zirconia,
especially 8YSZ,
alumina,
48YSZ or
a 48YSZ-alumina mixture.

5. Product according to claims 3 or 4,
wherein the surface (5) of the substrate (4) under the ceramic layer (7) comprises holes (10),
especially round holes,
elongated engravings (13, 16),
grids (11) or
combinations of it.

6. Product according to claim 5,
wherein the depth of the holes 10, engravings (13, 16) or grids (11) are between 50µm to 100µm.
